# EUROPEAN PATENT SPECIFICATION

(11) **EP 2 388 876 B1**
(45) Date of publication and mention of the grant of the patent: **26.06.2013**
(21) Application number: 11382153.2
(22) Date of filing: 16.05.2011
(51) Int. Cl.: H02G 3/30, H02G 3/32

(54) **Wall support for electrical conductor carrier trays**
Wandträger für elektrische Kabelkanäle
Support de paroi pour conduites de câbles électriques

(30) Priority: 18.05.2010 ES 201000509 U
(43) Date of publication of application: 23.11.2011
(73) Proprietor: Unex Aparellaje Electrico S.L., 08903 L'Hospitalet de Llobregat (Barcelona) (ES)
(72) Inventor: Mostazo Oviedo, Jose Antonio, 08940 Cornellà de Llobregat (ES)
(74) Representative: Curell Aguilà, Mireia

(56) References cited:
- FR-A1- 2 437 719

## Description

### Field of the invention

This invention relates to a wall support for electrical conductors carrier trays, of the type that are made up of a body having a rectangular seat base, for sitting on a vertical wall, from which there emerges in cantilever arrangement an inverted "U" shaped section the branches of which are perpendicular to the base thereof and decrease in height from their connection to said seat base to the end of their extension, with the base of said inverted "U" shaped section forming a flat seating spine for electrical conductor carrier trays, and said seat base having slide through holes with respect thereto. FR 2 437 719 shows such a wall support.

### State of the art

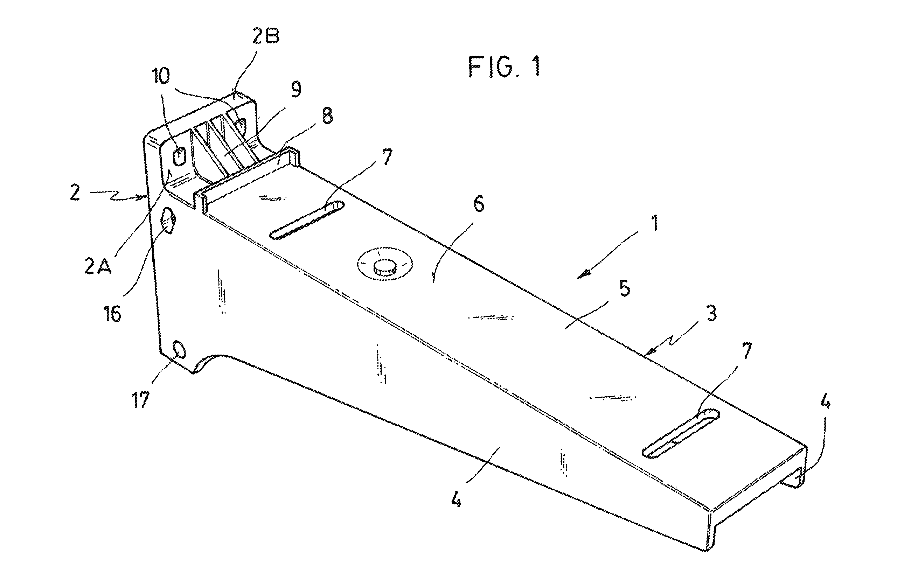

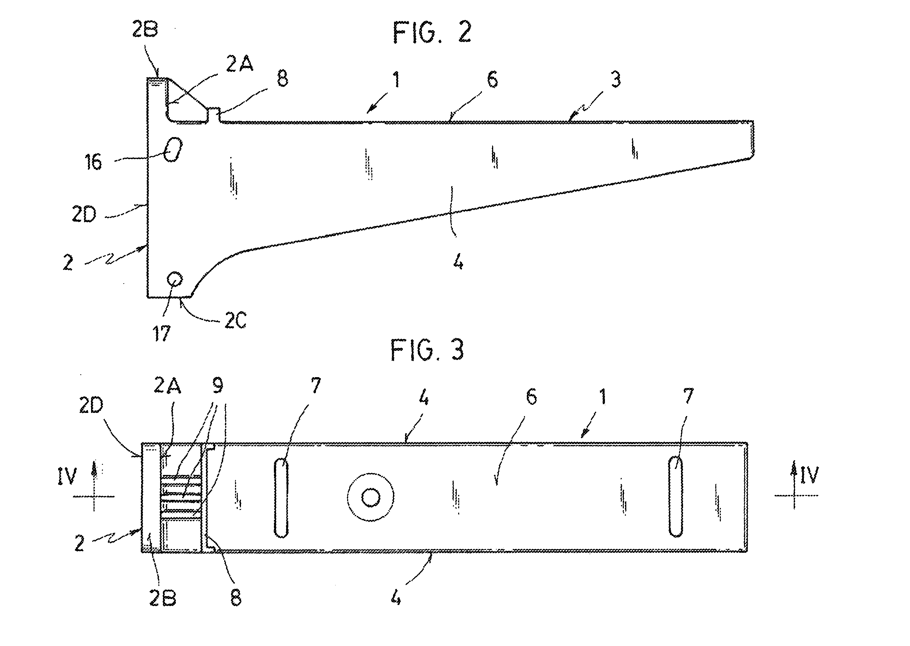

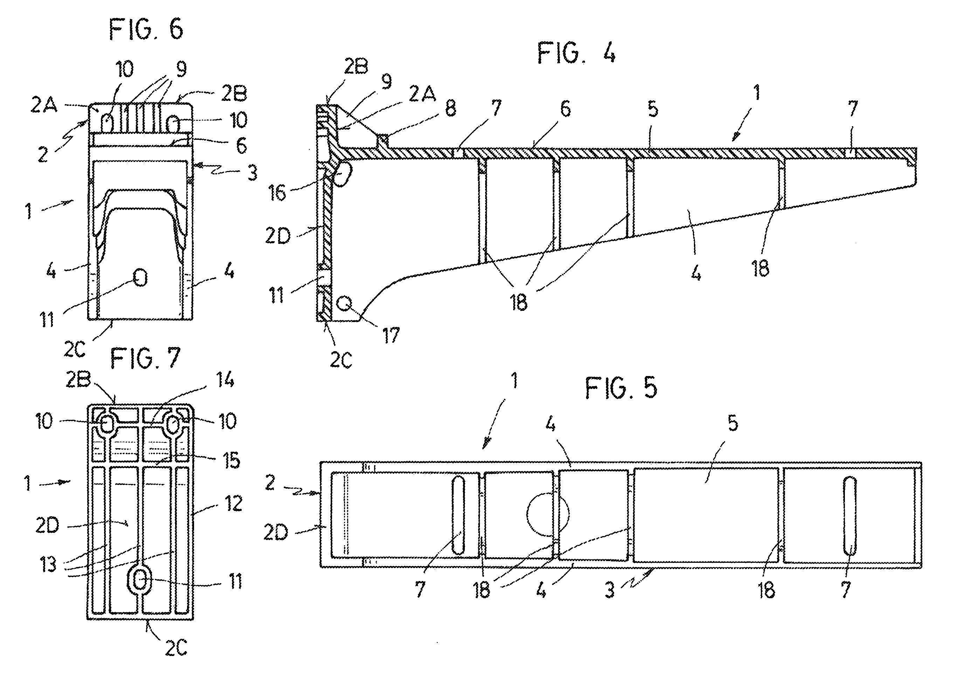

The known background are wall supports that have been sold on the market for many years by the applicant, and which are shown in Figs. 1 to 7.

### Disclosure of the invention

The known wall supports, such as the ones shown in Figs. 1 to 7, suffer from different drawbacks regarding the arrangement of the installation means, their structural resistance, the desired insulation of some of their possible suspension means, the efficiency in not retaining humidity, the absence of restrictions during installation, and others.

In order to overcome said drawbacks the wall support according to the invention has been designed, which consists of a redesign of the known wall supports shown in Figs. 1 to 7.

The wall support for electrical conductors carrier trays according to the invention is of the type indicated at the beginning, made up of a body having a rectangular seat base, for sitting on a vertical wall, from which there emerges in cantilever arrangement an inverted "U" shaped section the branches of which are perpendicular to the base thereof and decrease in height from their connection to said seat base to the end of their extension, with said base of the inverted "U" shaped section forming a flat seating spine for said trays, and said seat base having slide through holes with respect thereto. The wall support according to the invention is characterised in that each of said branches of the inverted "U" shaped section has, at the top end of the connection to said seat base, a slide hole that forms an outlet of a transverse electrical insulation conduit which crosses the gap of said inverted "U" shaped section.

Preferably, the wall support according to the invention comprises two of said slide holes in the seat base arranged near the top side of said seat base and distanced from the surface of said flat seating spine of the inverted "U" shaped section, with said two slide holes opening, at the front of said seat base, onto a step.

Preferably, the area of said flat seating spine next to said seat base is free of transverse end stop flanges, and the surfaces near said two holes in the seat base are formed in tilted planes.

Preferably, said two slide holes in the seat base are located on a peripheral quadrangular rib that is associated with a perimeter rib of said seat base and a transverse rib thereof.

Preferably, the rear face of said seat base is provided with reinforcement ribs that are deeper above and below said transverse electrical insulation conduit, and in said rear face and in the gap of said inverted "U" shaped section, under the start of said flat seating spine, there are brackets that cooperate with the first of a series of transverse internal partitions in said gap of the inverted "U" shaped section.

Preferably, said flat seating spine of the inverted "U" shaped section has multiple through grooves that are reinforced by means of extra thicknesses of the material of said inverted "U" shaped section located on the inner faces of the branches of said section and opposite the ends of said through grooves.

### Brief description of the drawings

To facilitate the comprehension of the ideas expounded, while also disclosing various construction details, a description is provided below of an embodiment of this invention, with reference to the drawings accompanying this specification, which, given their essentially illustrative purpose, should be interpreted as not having any imitative scope with respect to the extent of legal protection sought.
Figs. 1 to 7 represent a wall support for electrical conductors carrier trays of the known type, which has been made and sold by the applicant for years and which constitutes the state of the art known by the applicant.
Fig. 1 is a perspective view of the known wall support that constitutes the state of the art.
Fig. 2 to 7 are, respectively, a side elevation view, a top plan view, a sectioned view along line IV-IV in Fig. 3, a bottom plan view, a front elevation view and a rear elevation view of the wall support shown in Fig. 1 (state of the art).
Figs. 8 to 14 represent an embodiment of the wall support according to the invention.

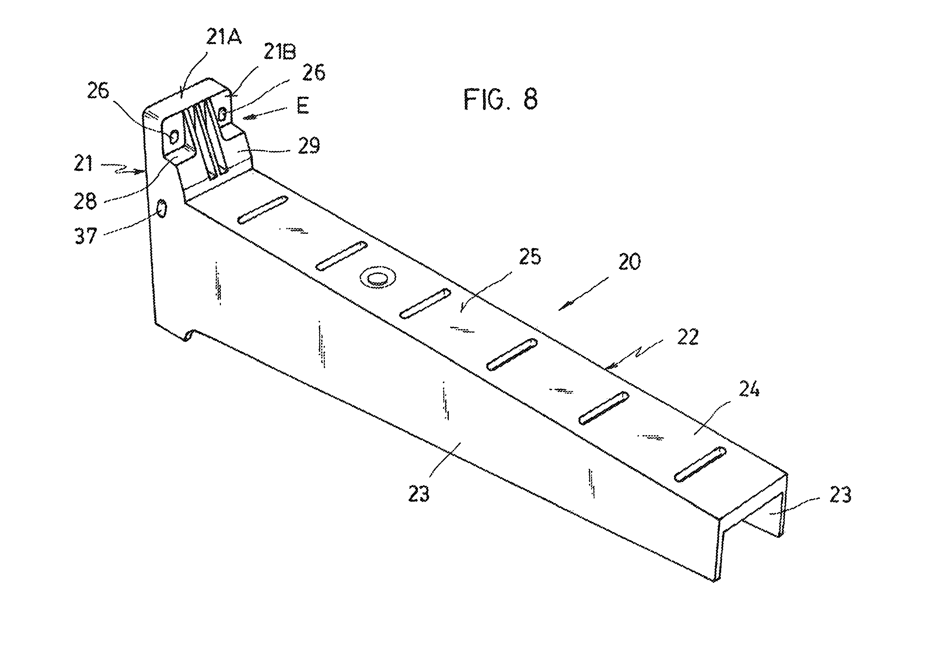

Fig. 8 is a perspective view of said wall support according to the invention.

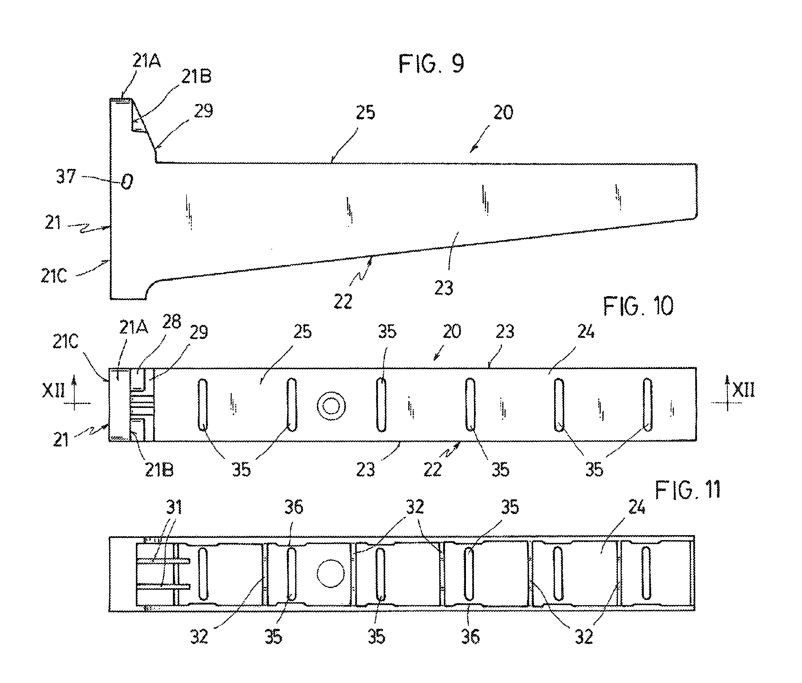

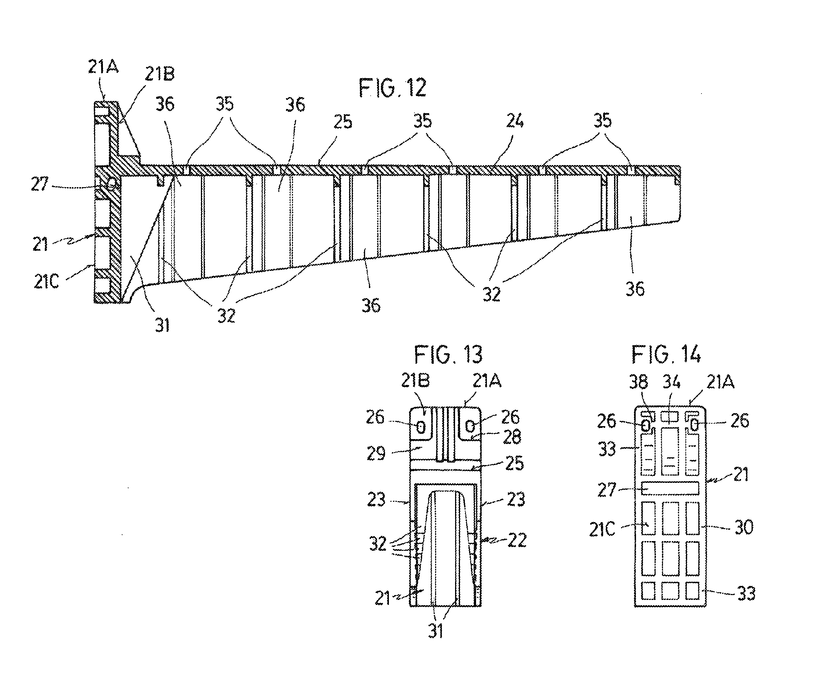

Figs. 9 to 14 are, respectively, a side elevation view, a top plan view, a bottom plan view, a sectioned view along line XII-XII in Fig. 10, a front elevation view and a rear elevation view, of the wall support according to the invention shown in Fig. 8.

### Detailed description of an embodiment of the invention

Figs. 1 to 7 show a wall support 1 that has been made for years by the applicant and which belongs therefore to the state of the art. This known wall support 1 is made up of a body having a rectangular seat base 2, for sitting on a vertical wall, from which there emerges in cantilever arrangement an inverted "U" shaped section 3 the branches 4 of which are normal to the base 5 thereof and decrease in height from their connection to said seat base 2 to the end of their extension. Base 5 of inverted "U" shaped section 3 forms a flat seating spine 6 that has, in two end areas, transverse through grooves 7 and, in the end area nearest seat base 2, a transverse end stop flange 8 which is associated, by a series of straight trapezoidal partitions 9 acting as stiffeners, to the front face 2A of said seat base 2.

Seat base 2 is traversed by two top slide holes that are of the through-type and are aligned near the top side 2B of said seat base 2, parallel thereto. These slide holes 10 are complemented by an equal lower slide hole 11, located in the centre near the bottom side 2C of said seat base 2. Rear face 2D of said seat base 2 has a perimeter reinforcement rib 12, three longitudinal ribs 13 in regular arrangement, with each one unfolding into a reinforcement for one of slide holes 10 and 11, and two transverse ribs 14 and 15 in the top area. The first one 14 of these transverse ribs extends between the two top slide holes 10 and the second one 15 transverses longitudinal ribs 13 at a point that is lower than said first transverse rib 14. It should be mentioned that top slide holes 10 open at a very low height of flat seating spine 6 of inverted "U" shaped section 3.

Each of the branches 4 of inverted "U" shaped profile 3, at a top point near their connection to said seat base 2, has a tilted slide hole 16 and, at a bottom point of said connection, each branch has a circular hole 17, both holes 16, 17 passing through towards the inside of the open space of inverted "U" shaped profile 3, where there are four transverse partitions 18.

Next, with reference to Figs. 8 to 14, a wall support 20 according to the invention is described, which is made up of a body having a rectangular seat base 21, for sitting on a vertical wall, from which there emerges in cantilever arrangement an inverted "U" shaped section 22 the branches 23 of which are normal to the base 24 thereof and decrease in height from their connection to said seat base 21 to the end of their extension. Said base 24 of inverted "U" shaped section 22 forms a flat seating spine 25.

In this wall support 20 according to the invention, branches 23 of inverted "U" shaped section 22 have tilted slide holes 37, arranged at the top point of the connection to seat base 21, acting as outlets for an electrical insulation conduit 27 that transverses the gap of inverted "U" shaped section 22. Also, in said branches 23 circular holes 17 which were arranged on known wall support 1, at the bottom point of the connection to seat base 2 thereof, have been omitted, thereby ensuring the electrical insulation of the metallic element extending inside thereof.

As a result of having reinforced the attachment area, seat base 21 has only two top slide holes 26 near the top side 21A of said seat base 21. Bottom slide hole 11 which was provided on wall support 1 belonging to the state of the art, has been omitted and said top slide holes 26 have been arranged noticeably distanced from the surface of the flat seating spine 25 of inverted "U" shaped section 22, to provide a larger free space E, as can be seen in Fig. 8, which makes it possible to mark the drilling point and freely apply tools to the screws that are needed when installing the wall support onto a wall.

Each of the two top holes 26 in seat base 21 opens, on the front face 21 B of said seat base 21, onto a step 28 for housing the attachment nuts and washers that may fall during installation.

Also the transverse end stop flange 8 of wall support 1 belonging to the state of the art, has been omitted to prevent the accumulation of rain water in outside installations. The surfaces near top slide holes 26 in the top area of the front face 21 B of seat base 21 have been formed as tilted planes 29 to facilitate the removal of rain water acting as drains.

The rear face 21C of seat base 21 has reinforcement ribs 30 that are deeper above and below said transverse insulation conduit 27. In the rear face 21C and in the gap of inverted "U" shaped section 22, particularly under the start of flat seating spine 25, there are two brackets 31 that cooperate with the first of a series of internal transverse partitions 32 in said gap. This arrangement has the effect of lightening the weight of wall support 20 and increasing its resistance to the load applied both in the horizontal position of said wall support 20, for horizontal tray paths, and with a 90º rotation of said wall support 20 for vertical tray paths.

Top slide holes 26 in seat base 21 are located on a peripheral quadrangular rib 38 that is associated with perimeter rib 33 of seat base 21 and a corresponding transverse rib 34 of said seat base 21, thereby forming reinforcement cylinders that translate the pressure from the anchoring elements to the wall as material compression instead of material bending.

The flat seating spine 25 on inverted "U" shaped section 22 has multiple through grooves 35 for attaching the trays. These through grooves 35 are reinforced by means of extra thicknesses 36 of the material of the inverted "U" shaped section 22, located on the inner faces of the branches 23 and opposite the ends of through grooves 35, which compensates the loss of the resistant section caused by said through grooves 35.

Through grooves 35 can be transverse, as they appear in the drawings, without thereby excluding that they can be arranged longitudinally or tilted.

## Claims

1. Wall support for electrical conductors carrier trays, made up of a body having a rectangular seat base (21), for sitting on a vertical wall, from which there emerges in cantilever arrangement an inverted "U" shaped section (22) the branches (23) of which are perpendicular to the base (24) thereof and decrease in height from their connection to said seat base (21) to the end of their extension, with said base (24) of inverted "U" shaped section (22) forming a flat seating spine (25) for said trays, and said seat base (21) having slide through holes (26) with respect thereto, each of said branches (23) of inverted "U" shaped section (22) having as slide hole (37) at the top point of connection to said seat base (21), **characterized in that** each silde hole (37) forms an outlet of a transverse electrical insulation conduit (27) that crosses the gap of said inverted "U" shaped profile (22).

2. Wall support according to claim 1, **characterized in that** it comprises two of said slide holes (26) in the seat base (21) arranged near the top side of said seat base (21) and distanced from the surface of said flat seating spine (25) of inverted "U" shaped section (22), with said two slide holes (26) opening, on the front face (2 B) of said seat base (21), onto a step (28).

3. Wall support according to claim 2, **characterized in that** the area of said flat seating spine (25) near said seat base (21) is free of transverse end stop flanges, and the surfaces near said two slide holes (26) of seat base (21) are formed in tilted planes (29).

4. Wall support according to claims 2 or 3, **characterized in that** said two slide holes (26) in seat base (21) are located on a peripheral quadrangular rib (38) that is associated with a perimeter rib (33) on said seat base (21) and a transverse rib (34) thereof.

5. Wall support according to any of the claims 1 to 4, **characterized in that** the rear face (21 C) of said seat base (21) is provided with reinforcement ribs (30) that are deeper above and below said transverse electrical insulation conduit (27), and in said rear face (21 C) and inside the gap of inverted "U" shaped section (22), under the start of said flat seating spine (25), there are brackets (31) that cooperate with the first of a series of internal transverse partitions (32) provided in said gap of inverted "U" shaped section (22).

6. Wall support according to any of the claims 1 to 5, **characterized in that** said flat seating spine (25) of inverted "U" shaped section (22) has multiple through grooves (35) that are reinforced by means of extra thicknesses (36) of the material of inverted "U" shaped section (22) located on the inner faces of branches (23) of said section and opposite the ends of said through grooves (35).

## Patentansprüche

1. Wandträger für elektrische Kabelkanäle aus einem Körper, der eine rechteckige Anlegefläche (21) zum Anlegen an eine vertikale Wand aufweist, aus der in einer Auslegeranordnung ein umgekehrt "U"-förmiger Abschnitt (22) hervortritt, dessen Schenkel (23) senkrecht zu dessen Grundfläche (24) sind und sich von ihrer Verbindung zu der Anlegefläche (21) bis zu dem Ende ihrer Ausbreitungin ihrer Höhe verjüngen, wobei die Grundfläche (24) des umgekehrt "U"-förmigen Abschnitts (22) einen flachen Auflagerücken (25) für die Kanäle bildet und die Anlegefläche (21) darauf bezogene Gleitstecklöcher (26) aufweist, wobei jeder der Schenkel (23) des umgekehrt "U"-förmigen Abschnitts (22) ein Gleitloch (37) an dem obersten Punkt der Verbindung zu der Anlegefläche (21) aufweist, **dadurch gekennzeichnet, dass** jedes Gleitloch (37) einen Auslass einer quer verlaufenden elektrischen Isolierleitung (27) bildet, die den Zwischenraum des umgekehrt "U"-förmigen Profils (22) kreuzt.

2. Wandträger nach Anspruch 1, **dadurch gekennzeichnet, dass** er zwei der Gleitlöcher (26) in der Anlegefläche (21) umfasst, die nahe der Oberseite der Anlegefläche (21) und mit Abstand von der Oberfläche des flachen Auflagerückens (25) des umgekehrt "U"-förmigen Abschnitts (22) angeordnet sind, wobei sich die zwei Gleitlöcher (26) zu einer Stufe (28) an der Stirnseite (21B) der Anlegefläche (21)hin öffnen.

3. Wandträger nach Anspruch 2, **dadurch gekennzeichnet, dass** der Bereich des flachen Auflagerückens (25) nahe der Anlegefläche (21) frei von Querend-Stoppflanschen ist, und die Oberflächen nahe den zwei Gleitlöchern (26) der Anlegefläche (21) in geneigten Ebenen (29) gebildet sind.

4. Wandträger nach Ansprüchen 2 oder 3, **dadurch gekennzeichnet, dass** sich die zwei Gleitlöcher (26) in der Anlegefläche (21) auf einer peripheren viereckigen Rippe (38) befinden, die mit einer Umfangsrippe (33) auf der Anlegefläche (21) und mit einer Querrippe (34) davon zusammengehörtt.

5. Wandträger nach einem der Ansprüche 1 bis 4, **dadurch gekennzeichnet, dass** die Rückseite (21C) der Anlegefläche (21) mit Verstärkungsrippen (30) versehen ist, die oberhalb und unterhalb der quer verlaufenden elektrischen Isolierleitung (27) tiefer sind, und dess in der Rückseite (21C) und innerhalb des Zwischenraums des umgekehrt "U"-förmigen Abschnitts (22) unterhalb des Beginns des flachen Auflagerückens (25) Winkel (31) vorhanden sind, die mit der ersten einer Reihe von in dem Zwischenraum des umgekehrt "U"-förmigen Abschnitts (22) vorgesehenen inwendig quer verlaufenden Zwischenwänden (32) zusammenwirken.

6. Wandträger nach einem der Ansprüche 1 bis 5, **dadurch gekennzeichnet, dass** der flache Auflagerücken (25) des umgekehrt "U"-förmigen Abschnitts (22) mehrere Durchgangsnuten (35) aufweist, die mittels einer sich an den Schenkelinnenseiten (23) des Abschnitts und gegenüber den Enden der Durchgangsnuten (35) befindlichen zusätzlichen Dicke (36) des Materials des umgekehrt "U"-förmigen Abschnitts (22) verstärkt sind.

## Revendications

1. Support de paroi pour conduites de câbles électriques, composé d'un corps ayant une base de siège(21) rectangulaire, pour être installée sur une paroi verticale, à partir de laquelle sort, en porte-à-faux, une section en forme de "U" inversé (22), dont les branches (23) sont perpendiculaires à leur base (24), et diminuent, du point de vue de la hauteur, à partir de leur raccordement à ladite base de siège (21) jusqu'à l'extrémité de leur extension, avec ladite base (24) de la section en forme de "U" inversé (22) qui forme un dos de siège plate (25) pour lesdites conduites, et ladite base de siège (21) ayant des trous de passage de coulissement (26) par rapport à cette dernière, chacune desdites branches (23) de la section en forme de "U" inversé (22) ayant un trou de coulissement (37) au point supérieur du raccordement à ladite base de siège (21), **caractérisé en ce que** chaque trou de coulissement (37) forme une sortie d'un conduit d'isolation électrique transversal (27) qui traverse l'espace dudit profil en forme de "U" inversé (22).

2. Support de paroi selon la revendication 1, **caractérisé en ce qu'**il comprend deux desdits trous de coulissement (26) dans ladite base de siège (21) agencés à proximité du côté supérieur de ladite base de siège (21) et espacés de la surface duditdos de siège plate (25) de la section en forme de "U" inversé (22), avec lesdits deux trous de coulissement (26) qui débouchent, sur la face avant (21B) de ladite base de siège (21), sur une marche (28).

3. Support de paroi selon la revendication 2, **caractérisé en ce que** la zone dudit dos de siège plate (25) à proximité de ladite base de siège (21) est dépourvue de brides de butée d'extrémitétransverses, et les surfaces à proximité desdits deux trous de coulissement (26) de la base de siège (21) sont formées dans des plans inclinés (29).

4. Support de paroi selon les revendications 2 ou 3, **caractérisé en ce que** lesdits deux trous de coulissement (26) dans la base de siège (21) sont positionnés sur une nervure quadrangulaire périphérique (38) qui est associée à une nervure périmétrale (33) sur ladite base de siège (21) et sa nervure transversale (34).

5. Support de paroi selon l'une quelconque des revendications 1 à 4, **caractérisé en ce que** la face arrière (21C) de ladite base de siège (21) est prévue avec des nervures de renforcement (30) qui sont plus profondes au-dessus et au-dessous dudit conduit d'isolation électrique transversal (27), et dans ladite face arrière (21C) et à l'intérieur de l'espace de la section en forme de "U" inversé (22), sous le début dudit dosde siège plate (25), on trouve des supports (31) qui coopèrent avec la première d'une série de cloisons transversales internes (32) prévues dans ledit espace de la section en forme de "U" inversé (22).

6. Support de paroi selon l'une quelconque des revendications 1 à 5, **caractérisé en ce que** ledit dos de siège plate (25) de la section en forme de "U" inversé (22) a plusieurs rainures de passage (35) qui sont renforcées au moyen d'épaisseurs supplémentaires (36) du matériau de la section en forme de "U" inversé (22) positionnées sur les faces internes des branches (23) de ladite section et les extrémités opposées desdites rainures de passage (35).
